# EUROPEAN PATENT SPECIFICATION

(11) **EP 0 779 205 B1**
(45) Date of publication and mention of the grant of the patent: **02.10.2002**
(21) Application number: 96120091.2
(22) Date of filing: 13.12.1996
(51) Int. Cl.: B62M 23/00, B62M 19/00

(54) **Two wheel drive motorcycle**
Motorrad mit Zweiradantrieb
Motocyclette à deux roues motrices

(30) Priority: 13.12.1995 JP 34674295
(43) Date of publication of application: 18.06.1997
(73) Proprietor: YAMAHA HATSUDOKI KABUSHIKI KAISHA, Iwata-shi Shizuoka-ken, 438 (JP)
(72) Inventor: Ohshita, Shigeru, Iwata-shi, Shizuoka-ken (JP); Jansson, Lars, 194 27 Upplands, Vasby (SE); Gustafsson, Lief, 194 27 Upplands, Vasby (SE)
(74) Representative: Grünecker, Kinkeldey, Stockmair & Schwanhäusser Anwaltssozietät

(56) References cited:
- FR-A- 2 589 213
- JP-A- 1 273 782
- JP-A- 5 112 155
- JP-A- 61 125 974

## Description

This invention relates to a two wheel drive motorcycle comprising a rear wheel drivable through an engine in association with the rotation of an output shaft of a transmission, and a front wheel supported by front forks and drivable through an oil motor which is associated to said front wheel and being operable by oil pressure from an oil pump operating in association with the rotation of said output shaft.

In the motorcycle, while only the rear wheel is generally driven for rotation by the output shaft of the transmission of the engine mounted, through a chain or the like, an idea has been suggested that the front wheel is driven for rotation together with the rear wheel so that a stable running condition can be obtained when running on the off-road or a snowy path. As a specific means, a system is disclosed in which an oil pump operating in association with the rotation of the output shaft of the transmission is provided and an oil motor driven by oil pressure from the oil pump is provided near the hub of the front wheel so that the front wheel is driven for rotation through the oil motor (see Japanese Unexamined Patent Publication Sho 61-125974, Japanese Unexamined Patent Publication Hei 1-273782, Japanese Unexamined Patent Publication Hei 5-92794 etc).

In the known system of the two wheel drive motorcycle utilizing an oil motor described above, the oil motor is installed to the front forks, with its body wholly exposed outside the hub of the front wheel, or formed integral with the axle and installed so as to be wholly enclosed in the hub of the front wheel.

However, in such a conventional two wheel drive motorcycle with an oil motor mounted outside the hub, the oil motor will protrude laterally outwardly from the front wheel significantly so that there is a fair possibility of the oil motor being hit by obstacles and damaged during running. Also, in the motorcycle with the oil motor formed integral with the axle and enclosed in the hub, while the oil motor can be protected from the outside by the hub, a problem arises that the structure of the hub itself will become complicated and the hub enclosing the oil motor will become large in size, causing difficulties in the assembly work of the related parts as well. Accordingly, it is an objective of the present invention to provide an improved two wheel drive motorcycle as indicated above which facilities with simple technical means, a proper protection for said oil motor and simultaneously is easy to handle and less complicated.

According to the invention this objective is solved for a two wheel drive motorcycle as indicated above in that said oil motor is a swash plate motor disposed rearwardly from said front forks facing said engine and offset from an axle of a hub of said front wheel.

According to a preferred embodiment of the present invention said hub body having an annular space with a centre at said axle, and said swash plate motor comprising a first section enclosing a plurality of plungers and a second section having a protruded output shaft both coupled at an obtuse angle directed to said rear wheel, whereby only the second section of said oil motor is enclosed within said annular space.

In this connection it is advantageous when said hub body is provided with an internal gear meshing with an external gear fixed to said output shaft of said swash plate motor because this configuration is more space saving, even less complicated and easier to handle.

The controllability of said swash plate motor may be further enhanced by an oil circuit being provided between said oil pump and said swash plate motor and comprising an oil feed hose having an accumulator and a first bypass passage provided with a pressure regulating valve.

In case the driving force of the oil motor or swash plate motor should be adjustable it is advantageous when said oil circuit further comprising a second bypass passage provided with an oil motor drive switching valve for switching on and off said swash plate motor.

According to a preferred embodiment said swash plate motor is adjustable by turning on said oil motor drive switching valve into its closed position so that the pressure of the oil flowing from the oil pump to said swash plate motor is regulatable by said oil pressure regulating valve, whereby in the open position of said oil motor drive switching valve the oil pressure is releasable via said second bypass passage.

Other preferred embodiments of the present invention are laid down in further dependent claims.

In the following, the present invention is explained in greater detail with respect to several embodiments thereof in conjunction with the accompanying drawings, wherein:
Fig. 1 is a left side view showing an embodiment of a two wheel drive motorcycle of this invention;
Fig. 2 is a fragmentary right side view of the two wheel drive motorcycle of Fig. 1, showing the vicinity of the front wheel;
Fig. 3 is a circuit illustration of the front and rear wheel drive mechanism of the two wheel drive motorcycle of Fig. 1,
Fig. 4 is a fragmentary side view of the two wheel drive motorcycle of Fig. 1, showing the oil pump being mounted;
Fig. 5 is a partially sectional view taken along line A - A of Fig. 4, showing the mounting structure of the oil pump in the two wheel drive motorcycle of Fig. 1;
Fig. 6 is a partially sectional fragmentary plan view of the two wheel drive motorcycle of Fig. 1, showing the hub of the front wheel and the oil motor being installed thereon.

An embodiment of a two wheel drive motor cycle of this invention will be described below with reference to the accompanying drawings.

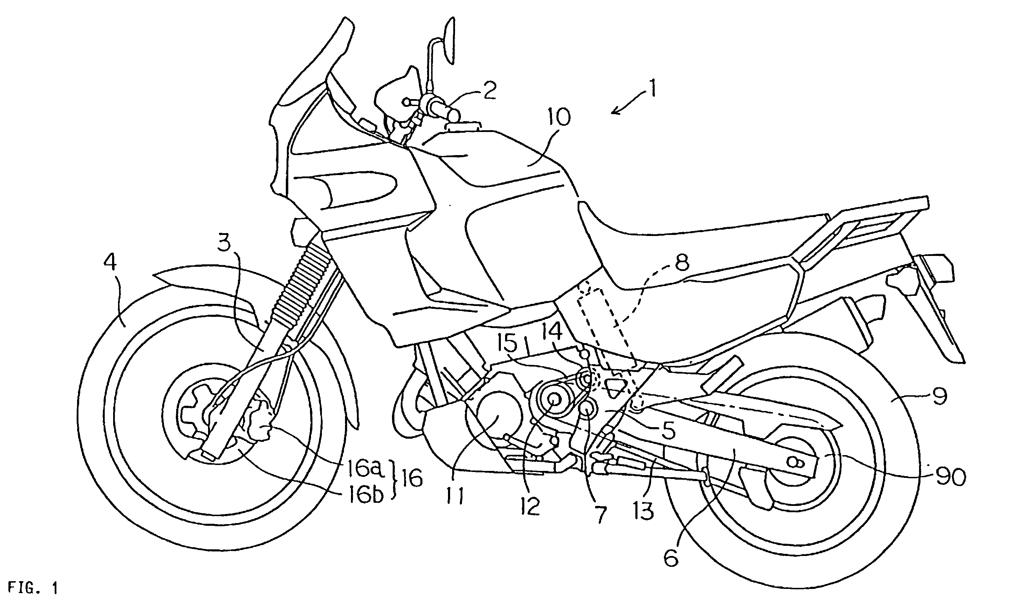

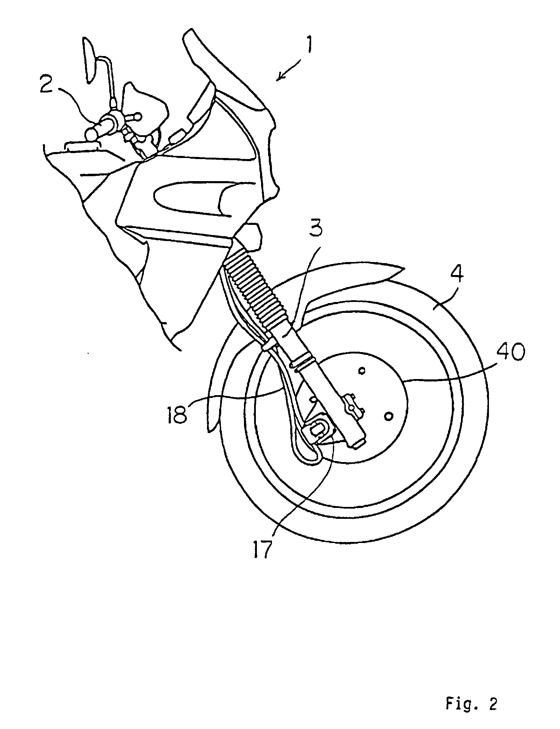

Fig. 1 is a complete left side view of a two wheel drive motorcycle of this invention, and Fig. 2 is a fragmentary right side view of the motorcycle, showing the vicinity of the front wheel. In a dual purpose type motorcycle 1 (for on-road and off-road purpose), on a head pipe (not shown) provided at the forward end of a main frame is supported a steering section provided with a handle 2 at the top and front forks 3 at the bottom; the front wheel 4 is mounted on an axle fixed near the lower end of the front forks 3 adapted to be rotatable through the operation of the handle 2.

The main frame is provided at the rear end with a pair of right and left rear arm brackets 5 extending downwardly; on the rear arm brackets are supported the forward ends of rear arms 6 by a pivot shaft 7; between the rear arms 6 and the main frame is interposed a rear cushion 8 comprised of the combination of a spring and an oil damper; and a rear wheel 9 is mounted on an axle fixed for adjustment near the rear ends of the rear arms 6 supported for vertical swinging movement on the vehicle body through the rear cushion 8.

Between the front wheel 4 and the rear wheel 9 is provided on the main frame a fuel tank in a straddle fashion; downwardly of the fuel tank 10 is provided an engine 11; from a crankcase of the engine 11 is protruded sidewardly an output shaft 12 of a transmission; and a chain 13 is stretched over the sprocket fixed to the output shaft 12 and a sprocket fixed to a hub 90 of the rear wheel 9.

In a space of the motorcycle 1 surrounded by the engine 11, the rear cushion 8, and the rear arms 6, is disposed an oil pump 14; and a chain 15 is stretched over a sprocket fixed to the input shaft of the oil pump 14 and a sprocket (different from the one with the chain 15) fixed to the output shaft 12 so that the oil pump 14 can be operated in association with the rotation of the output shaft 12.

On one side (the left side) of the front wheel 4 of the motorcycle 1 is disposed a disc brake 16 comprised of a caliper 16a and a brake disc 16b, and on the other side (the right side) of the front wheel 4 is disposed an oil motor 17 located rearwardly of the front forks 3 and within the radius of a hub 40 of the front wheel 4; and the oil pump 14 and the oil motor 17 are in communication with each other through an oil feed hose 18 so that the oil motor 17 can be driven through oil pressure generated by the oil pump 14.

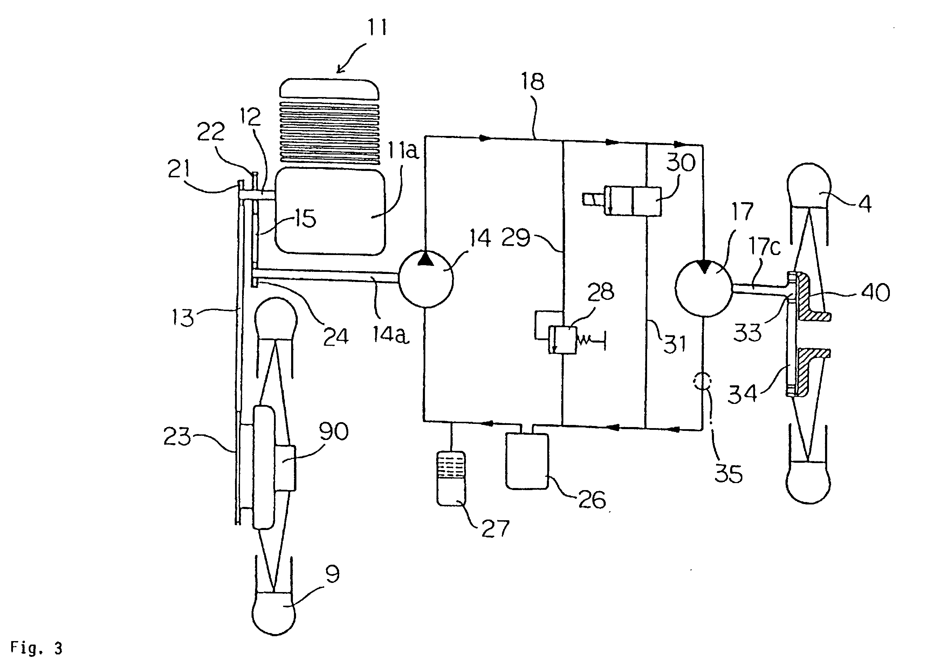

Fig. 3 shows a mechanism for driving the front and rear wheels 4, 9 in the motorcycle 1 with the oil pump 14 and the oil motor 17 disposed as described above. To the output shaft 12 of the transmission protruded sidewardly from the crankcase 11a of the engine 11 are fixed two sprockets 21, 22, and one sprocket 21 is connected to a sprocket 23 fixed to the hub 90 of the rear wheel 9 through the chain 13 so that the rotation of the output shaft 12 causes the rear wheel 9 to be driven for rotation through the sprocket 21, the chain 13, and the sprocket 23.

The other sprocket 22 is connected to a sprocket 24 fixed to an input shaft 14a of the oil pump 14 through a chain 15 so that the rotation of the output shaft 12 causes the oil pump 14 to operate through the sprocket 22, the chain 15, and the sprocket 24.

Between the oil pump 14 and the oil motor 17 is formed an oil circuit comprised of an oil feed hose 18; in the middle of the oil circuit are provided an oil filter 26 and an accumulator 27, and formed a bypass passage 29 provided with an oil pressure regulating valve 28 as well as a bypass passage 31 provided with an oil motor drive switching valve 30 for turning on and off the oil motor 17.

The driving force of the oil motor 17 can be adjusted by turning on the oil motor drive switching valve 30 (closed) so as to regulate the pressure of the oil flowing from the oil pump 14 into the oil motor 17 through the oil pressure regulating valve 28, and the operation of the oil motor 17 can be stopped by turning off the oil motor drive switching valve 30 (opened) so as to release the oil pressure from the bypass passage 31.

When the rotation of the output shaft 12 causes the oil pump 14 to operate and the resultant oil pressure is supplied to the oil motor 17 continuously, the oil motor 17 is driven to rotate its output shaft 17c. Since an external gear 33 fixed to the output shaft 17 is in engagement with an internal gear 34 fixed inside the hub 40 of the front wheel 4, the rotation of the output shaft 17 is transmitted to the hub 40 of the front wheel 4, causing the front wheel 4 to be driven for rotation.

If an opening/closing valve 35 Is provided in the middle of the oil circuit, the front wheel can be forced to stop during turning when the oil motor drive switching valve 30 is turned on (closed) and the opening/closing valve 35 is closed. This function is utilized as a brake with the result that the disc brake 16 can be eliminated.

In the motorcycle 1 with two wheel drive mechanism described above, the oil pump 14 and the oil motor 17 in this embodiment are installed to the motorcycle, with structures described below, respectively.

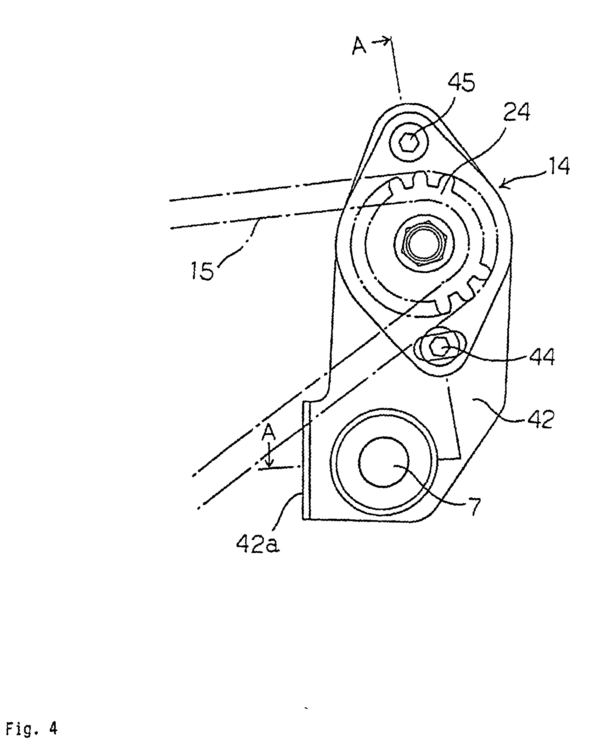

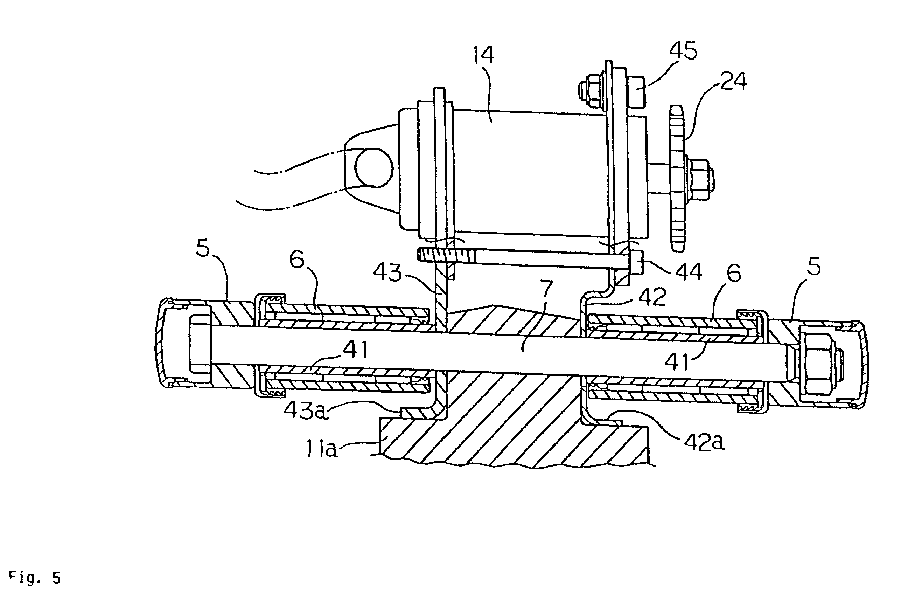

Fig. 4 is a fragmentary side view of the motorcycle, showing the oil pump 14 being mounted, and Fig. 5 is a view taken along line A - A of Fig. 4, showing the mounting structure of the oil pump 14. As shown in Fig. 5, on the pivot shaft 7 passing through the protruding portion of the crankcase 11a and extending across the right and left frames (rear arm brackets), at both sides thereof, are mounted the forward ends of the right and left rear arms 6, for rotation through collars 41, respectively.

Onto the pivot shaft 7 are fitted a pair of pump mounting brackets 42, 43 for mounting the oil pump 14, with their contact portions 42a, 43a at the lower forward edges being set against the rear walls of the crankcase 11a and with their center portions held between the side walls of the protruding portion of the crankcase 11a and the collars 41.

The oil pump 14 are mounted to the pump mounting brackets 42, 43 with bolts 44, 45 so that it is installed, as shown in Fig. 1, in the space surrounded by the the engine 11, the rear cushion 8, and the rear arms 6 so as to be secured upwardly of the pivot shaft 7 on the rear arms 6.

According to the installation structure of the oil pump14 of this embodiment, the oil pump 14 is installed in the space surrounded by the engine 11, the rear cushion 8, and the rear arms 6, it can be located close to the center of gravity of the vehicle with little influence on the weight distribution of the vehicle.

Further, since the pump mounting bracket 42, 43 can be secured through a simple means of just fitting onto the pivot shaft 7, and the contact portions 42a, 43a formed at the lower forward edges of the pump mounting bracket 42, 43 are adapted to be set against the rear walls of the crankcase 11a, the pump bracket 42, 43 will not be turned when the tension of the chain 15 is exerted on the oil pump 14, so that the oil pump 14 can be secured reliably.

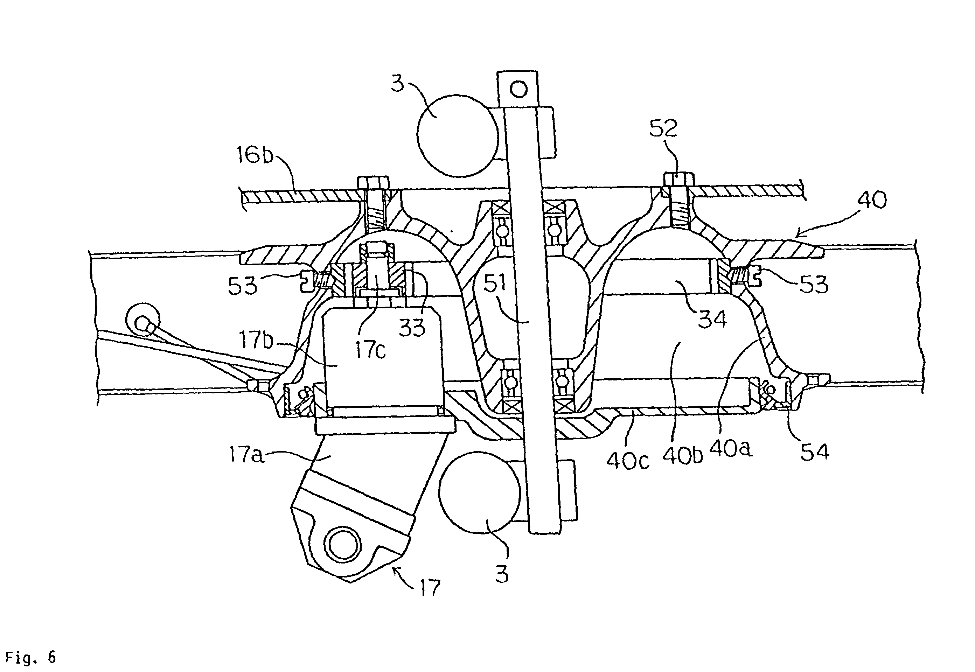

Fig. 6 shows an installation structure of the oil motor 17. In a hub body 40a of the front wheel 4 mounted for rotation on an axle 51 fixed to the right and left front forks 3, is formed an annular space 40b with a center at the axle 51 when viewed in profile, with one side (the right side) open, and on the other side (the left side) of the hub body 40a is fixed the brake disc 16b with bolts 52.

The open side (the right side) of the annular space 40b of the hub 40 is covered by a cap member 40c fixed to the axle 51; between the periphery of the cap member 40c and the hub body 40a is provided a seal member 54 for filling the gap; and on the cap member 40c and rearwardly of the front forks 3 is mounted the oil motor 17 so as to penetrate the cap member 40c.

The oil motor 17 is of an axial plunger type known as what is called a swash plate motor. It has an internal structure (not shown) in which a plurality of circularly disposed plungers are in a driving contact with a plate disposed oblique to the axial line of the plungers, and expanded and contracted in due order at certain intervals through oil pressure so that the axial movement of the plungers is converted to a rotary movement through the plate in engagement with the plungers. As for the configuration of the oil motor, as shown in Fig. 6, a section 17a enclosing a plurality of plungers and a section 17b having the protruded output shaft 17c are coupled at an obtuse angle in plan view to each other.

With the oil motor 17 mounted to the cap member 40c, only the section 17b of the oil motor 17 is enclosed in the annular space 40b so as to be offset sidewardly from the crosswise body center, and the section 17a of the oil motor 17, protruded laterally outwardly from one side of the hub 40, is located rearwardly of the front forks 3 and within the radius of the hub 40 when viewed in profile.

In the annular space 40b enclosing the oil motor 17 disposed so as to be offset sidewardly from the crosswise body center, at a place offset from the crosswise body center to the side opposite to the oil motor 17 is fixed to the hub body 40a with bolts 53 the internal gear 34, and the teeth of the internal gear 34 are engaged with the teeth of the external gear 33 fixed to the output shaft 17c of the oil motor 17.

Thus, when the output shaft 17c of the oil motor 17 whose position is fixed relative to the axle 51, rotates, the rotational force is transmitted to the hub body 40a through the external gear 33 and the internal gear 34, and then the hub body 40a supported on the axle 51 for rotation is rotated, driving the front wheel 4 for rotation.

According to the two wheel drive motorcycle 1 with an oil motor 17 of this embodiment, with regard to the installation of the oil motor 17 to the hub 40 of the front wheel 4, assembly work of the related parts is completed simply by fixing the oil motor 17 to the cap member 40c of the hub 40 from outside after the axle 51 and the hub 40 of the front wheel 4 have been mounted to the front forks 3 in the traditional manner, so that the work can be performed easily compared with the conventional oil motor being formed integral with the axle section in the hub.

Further, the oil motor 17 mounted to the hub 40 of the front wheel 4 is a swash plate motor in which the section 17a and the section 17b are coupled at an obtuse angle to each other so that the oil motor 17 can be compactly disposed radially as close as possible to the axle 51 with respect to the front wheel, without interference between the protruded section 17a and the front forks 3 in the longitudinal direction. As a result, the diameter of the hub 40 itself can be diminished and the weight of the related parts can be decreased, reducing the inertial mass around the steering shaft.

Moreover, the oil motor 17 is enclosed partially in the hub 40 so that the hub 40 itself can be made as compact as the conventional front wheel hub with respect to the crosswise direction, without getting thicker and bulky, and in spite of the section 17a of the oil motor protruding outwardly from the hub 40, the protruded section 17a is located rearwardly of and close to the front forks 3 so that the section 17a can be protected by the front forks 3 from obstacles coming to the front when running.

According to the two wheel drive motorcycle of this invention described above, assembly work of the front wheel and the oil motor to the vehicle can be performed easily, the oil motor can be installed compactly without increasing the size of the hub section of the front wheel too much, the weight of the related parts can be decreased, reducing the inertial mass around the steering shaft, and the oil motor can be protected adequately from obstacles during running.

## Claims

1. A two-wheel drive motorcycle (1) comprising a rear wheel (9) drivable through an engine (9) in association with the rotation of an output shaft (12) of a transmission, and a front wheel (4) supported by front forks (3) and drivable through an oil motor (17) which is associated to said front wheel (4) and being operable by oil pressure from an oil pump (14) operating in association with the rotation of said output shaft (12), **characterized in that** said oil motor is a swash plate motor (17) disposed rearwardly from said front forks (3) facing said engine (9) and offset from an axle (51) of a hub (40) of said front wheel (4).

2. A two-wheel drive motorcycle according to claim 1, **characterized in that** said swash plate motor (17) is disposed within the radius of said hub (40) of said front wheel (4).

3. A two-wheel drive motorcycle according to claim 1 or 2, **characterized in that** said hub (40) comprising a hub body (40a) having an annular space (40b) with a center at said axle (51), and said swash plate motor (17) comprising a first section (17a) enclosing a plurality of plungers and a second section (17b) having a protruded output shaft (17c) both coupled at an obtuse angle directed to said rear wheel (9), whereby only the second section (17b) of said oil motor (17) is enclosed within said annular space (40b).

4. A two-wheel drive motorcycle according to claim 3, **characterized in that** said annular space (40b) is covered by a cap member (40c), whereby said swash plate motor (17) is fastened to said cap member (40c) so as to penetrate said cap member (40c).

5. A two-wheel drive motorcycle according to claim 3 or 4, **characterized in that** said hub body (40a) is provided with an internal gear (34) meshing with an external gear (33) fixed to said output shaft (17c) of said swash plate motor (17).

6. A two-wheel drive motorcycle according to at least one of claims 1 to 5, **characterized in that** said output shaft (12) of said transmission being provided with a first sprocket (22) connected through a chain (15) to a second sprocket (24) fixed to an input shaft (14a) of said oil pump (14).

7. A two-wheel drive motorcycle according to at least one of claims 1 to 6, **characterized by** an oil circuit being provided between said oil pump (14) and said swash plate motor (17) and comprising an oil feed hose (18) having an accumulator (27) and a first bypass passage (29) provided with a pressure regulating valve (28).

8. A two-wheel drive motorcycle according to claim 7, **characterized in that** said oil circuit further comprising a second bypass passage (31) provided with an oil motor drive switching valve (30) for switching on and off said swash plate motor (17).

9. A two-wheel drive motorcycle according to claim 8, **characterized in that** said swash plate motor (17) is adjustable by turning on said oil motor drive switching valve (30) into its closed position so that the pressure of the oil flowing from the oil pump (14) to said swash plate motor (17) is regulatable by said oil pressure regulating valve (28), whereby in the open position of said oil motor drive switching valve (30) the oil pressure is releasable via said second bypass passage (31).

10. A two-wheel drive motorcycle according to at least one of claims 7 to 9, **characterized by** an opening/closing valve (35) within said oil circuit for forcibly stopping said front wheel (4) when the oil motor drive switching valve (30) is turned on in its closed position and said opening/closing valve (35) is closed.

## Patentansprüche

1. Zweirad-angetriebenes Motorrad (1) mit einem Hinterrad (9) angetrieben durch einen Motor (11) in Verbindung mit der Drehung einer Abtriebswelle (12) eines Getriebes und einem Vorderrad (4) gelagert durch Frontgabeln (3) und antreibbar durch einen Ölmotor (17), der mit dem Vorderrad (4) verbunden ist und durch einen Öldruck von einer Ölpumpe(14), die in Verbindung mit der Rotation der Abtriebswelle (12) betätigbar ist, **dadurch gekennzeichnet, dass** der Ölmotor ein Taumelscheibenmotor (17) ist, der hinter den Vordergabeln (3) angeordnet und dem Motor (11) zugewandt und versetzt von einer Achse (51) einer Nabe (40) des Vorderrades (4) ist.

2. Zweirad-angetriebenes Motorrad nach Anspruch 1, **dadurch gekennzeichnet, dass** der Taumelscheibenmotor (17) innerhalb des Radius der Nabe (40) des Vorderrades (4) angeordnet ist.

3. Zweirad-angetriebenes Motorrad nach Anspruch 1 oder 2, **dadurch gekennzeichnet, dass** die Nabe (40) einen Nabenkörper (40a) aufweist, der einen Ringraum (40b) mit einer Mitte an der Achse (51) aufweist und wobei der Taumelscheibenmotor (17) einen ersten Abschnitt (17a) aufweist, der eine Mehrzahl von Kolben enthält und einen zweiten Abschnitt (17b), der eine vorspringende Abtriebswelle (17c) aufweist, beide gekoppelt unter einem stumpfen Winkel, gerichtet zu dem Hinterrad (9), wodurch nur der zweite Abschnitt (17b) des Ölmotors (17) innerhalb des Ringraumes (40b) enthalten ist.

4. Zweirad-angetriebenes Motorrad nach Anspruch 3, **dadurch gekennzeichnet, dass** der Ringraum (40b) durch ein Kappenteil (40c) abgedeckt ist, wodurch der Taumelscheibenmotor (17) an dem Kappenteil (40c) befestigt ist, um so das Kappenteil (40c) zu durchdringen.

5. Zweirad-angetriebenes Motorrad nach Anspruch 3 oder 4, **dadurch gekennzeichnet, dass** der Nabenkörper (40a) mit einem Innenzahnrad (34) in Kämmeingriff mit einem Aussenzahnrad (33) versehen ist, befestigt auf der Abtriebswelle (17c) des Taumelscheibenmotors (17).

6. Zweirad-angetriebenes Motorrad nach zumindest einem der Ansprüche 1 - 5, **dadurch gekennzeichnet, dass** die Abtriebswelle (12) des Getriebes mit einem ersten Kettenrad (22) verbunden durch eine Kette (15) mit einem zweiten Kettenrad (24), befestigt auf einer Eingangswelle (40a) der Ölpumpe (14) versehen ist.

7. Zweirad-angetriebenes Motorrad nach zumindest einem der Ansprüche 1 - 6, **gekennzeichnet durch** einen Ölkreislauf, der zwischen der Ölpumpe (14) und dem Taumelscheibenmotor (17) vorgesehen ist und einen Ölzuführungsschlauch (18) aufweist, der einen Sammler (27) und einen ersten Beipasskanal (29), versehen mit einem Öldruck-Regulierventiel (28) aufweist.

8. Zweirad-angetriebenes Motorrad nach Anspruch 7, **dadurch gekennzeichnet, dass** der Ölkreislauf außerdem aufweist einen zweiten Beipasskanal (31) versehen mit einem den Ölmotor antreibenden Schaltventil (30), zum Ein- und Ausschalten des Taumelscheibenmotors (17).

9. Zweirad-angetriebenes Motorrad nach Anspruch 8, **dadurch gekennzeichnet, dass** der Taumelscheibenmotor (17) durch Schalten des den Ölmotor antreibenden Schaltventiles (30) in seine geschlossene Stellung einstellbar ist, so dass der Druck des Öles, das von der Ölpumpe (40) zu dem Taumelscheibenmotor (17) strömt, durch das Öldruck-Regulierventil (28) regulierbar ist, wodurch in der Offenstellung des den Ölmotor antreibenden Schaltventiles (30) der Öldruck über den zweiten Beipasskanal (31) entlastet werden kann.

10. Zweirad-angetriebenes Motorrad nach zumindest einem der Ansprüche 7 - 9, **gekennzeichnet durch** ein Öffnungs-/Schließ-Ventil (35) innerhalb des Ölkreislaufes zum zwangsweisen Stoppen des Vorderrades (4), wenn das den Ölmotor antreibende Schaltventil (30) in seine Schließstellung eingeschaltet wird und das Öffnung-/Schließ-Ventil (35) geschlossen ist.

## Revendications

1. Motocyclette à deux roues motrices (1), comportant une roue arrière (9) pouvant être entraînée par l'intermédiaire d'un moteur (9) en association avec la rotation d'un arbre de sortie (12) d'une transmission, et une roue avant (4) supportée par des fourches avant (3), et pouvant être entraînée par l'intermédiaire d'un moteur à huile (17) qui est associé à ladite roue avant (4), et pouvant fonctionner par l'intermédiaire de la pression d'huile d'une pompe à huile (14) fonctionnant en association avec la rotation dudit arbre de sortie (12),
**caractérisée en ce que** ledit moteur à huile est un moteur à disque en nutation (17) disposé à l'arrière desdites fourches avant (3) et en regard dudit moteur (9), et décalé à partir d'un essieu (51) d'un moyeu (40) de ladite roue avant (4).

2. Motocyclette à deux roues motrices selon la revendication 1, **caractérisée en ce que** ledit moteur à disque en nutation (17) est disposé dans le rayon dudit moyeu (40) de ladite roue avant (4).

3. Motocyclette à deux roues motrices selon la revendication 1 ou 2, **caractérisée en ce que** ledit moyeu (40) comporte un corps de moyeu (40a) ayant un espace annulaire (40b) muni d'un centre au niveau dudit essieu (51), et ledit moteur à disque en nutation (17) comportant un premier tronçon (17a) renfermant une pluralité de plongeurs, et un second tronçon (17b) ayant un arbre de sortie faisant saillie (17c), tous les deux accouplés au niveau d'un angle obtus dirigé vers l'arrière de ladite roue arrière (9), de sorte que seul le second tronçon (17b) dudit moteur à huile (17) est enfermé dans ledit espace annulaire (40b).

4. Motocyclette à deux roues motrices selon la revendication 3, **caractérisée en ce que** ledit espace annulaire (40b) est recouvert d'un élément formant couvercle (40c), de sorte que ledit moteur à disque en nutation (17) est fixé sur ledit élément formant couvercle (40c) de manière à pénétrer dans ledit élément formant couvercle (40c).

5. Motocyclette à deux roues motrices selon la revendication 3 ou 4, **caractérisée en ce que** ledit corps de moyeu (40a) est muni d'un engrenage intérieur (34) engrenant avec un engrenage extérieur (33) fixé sur ledit arbre de sortie (17c) dudit moteur à disque en nutation (17).

6. Motocyclette à deux roues motrices selon l'une quelconque des revendications 1 à 5, **caractérisée en ce que** ledit arbre de sortie (12) de ladite transmission est muni d'un premier pignon (22) connecté par l'intermédiaire d'une chaîne (15) à un second pignon (24) fixé sur un arbre d'entrée (40a) de ladite pompe à huile (14).

7. Motocyclette à deux roues motrices selon l'une quelconque des revendications 1 à 6, **caractérisée par** un circuit d'huile étant fourni entre ladite pompe à huile (14) et ledit moteur à disque en nutation (17), et comportant un tuyau d'alimentation en huile (18) ayant un accumulateur (27) et un premier passage de dérivation (29) muni d'une vanne de régulation de pression (28).

8. Motocyclette à deux roues motrices selon la revendication 7, **caractérisée en ce que** ledit circuit d'huile comporte de plus un second passage de dérivation (31) muni d'une soupape de commutation d'entraînement de moteur à huile (30) pour rendre actif et arrêter ledit moteur à disque en nutation (17).

9. Motocyclette à deux roues motrices selon la revendication 8, **caractérisée en ce que** ledit moteur à disque en nutation (17) peut être ajusté en rendant active ladite soupape de commutation d'entraînement de moteur à huile (30) dans sa position fermée, de sorte que la pression de l'huile s'écoulant à partir de la pompe à huile (14) vers ledit moteur à disque en nutation (17) peut être régulée par ladite vanne de régulation de pression d'huile (28), de sorte que dans la position ouverte de ladite soupape de commutation d'entraînement de moteur à huile (30), la pression d'huile peut être libérée par l'intermédiaire dudit passage de dérivation (31).

10. Motocyclette à deux roues motrices selon l'une quelconque des revendications 7 à 9, **caractérisée par** une soupape d'ouverture/de fermeture (35) dans ledit circuit d'huile pour stopper de manière forcée ladite roue avant (4) lorsque la soupape de commutation d'entraînement de moteur à huile (30) est rendue active dans sa position fermée, et lorsque ladite soupape d'ouverture/de fermeture (35) est fermée.
